# EUROPEAN PATENT APPLICATION

(11) **EP 1 837 690 A1**
(43) Date of publication of application: **26.09.2007**
(21) Application number: 07103041.5
(22) Date of filing: 26.02.2007
(51) Int. Cl.: G02B 7/10

(54) **Camera device within an information communication apparatus**

(30) Priority: 20.03.2006 KR 20060025153
(71) Applicant: Samsung Electronics Co., Ltd., Suwon-si, Gyeonggi-Do (KR)
(72) Inventor: Shin, Dook-Sik 224-901, Hwanggol Maeul 2-danji Byeoksan Apt., Gyeonggi-do (KR)
(74) Representative: Grünecker, Kinkeldey, Stockmair & Schwanhäusser Anwaltssozietät

(57) **Abstract**

A miniaturized camera device suitable for inclusion in another device is disclosed. The camera device enables a user to manually adjust a focal distance of a lens barrel. Therefore, it is possible to miniaturize the camera device by omitting an actuator of the camera device.

## Description

### BACKGROUND OF THE INVENTION

### 1. Field of the Invention

The present invention relates to a camera device and, more particularly, to a miniaturized camera device.

### 2. Description of the Related Art

With development of information communication and semiconductor technologies, various communication devices such as a digital camera, a mobile terminal, a video camera, a video phone, and so on are being manufactured. Recently, various functions are added to mobile communication devices. In order to add the various functions to the mobile communication devices, the added devices should be miniaturized.

Since a camera device, which is among the added devices, occupies a particularly large space, miniaturization of the camera device is essential. In many cases, the camera device employs an automatic focusing device for automatically performing close-ups and long shots. The automatic focusing device of the camera device includes an actuator for adjusting the relative position of a lens or a sensor. Such an actuator makes an installation space of the camera device larger.

### SUMMARY OF THE INVENTION

In order to solve the foregoing and/or other problems, it is an aspect of the present invention to provide a miniaturized camera device within an information communication device.

Additional aspect and advantages of the present invention will be set forth in part in the description which follows and, in part, will be obvious from the description, or may be learned by practice of the invention.

An aspect of the present invention provides a camera device including a lens assembly having at least one zoom lens barrel through which an image of a subject enters, an inner optical tube in which the zoom lens barrel is movably accommodated in a direction incident to (perpendicular) the image, an outer optical tube having the inner optical tube accommodated therein, installed rotatably with respect to the inner optical tube, and adjusting a focal distance of the subject by moving the zoom lens barrel depending on the rotation, a slide key movably engaged with the outer optical tube to rotate the outer optical tube, and an image sensor module through which the image passed through the zoom lens barrel enters.

Another aspect of the present invention provides a camera device including a lens assembly having at least two zoom lens barrels through which an image of a subject enters, an inner optical tube in which the zoom lens barrels are movably accommodated in an incident direction of the image, an outer optical tube having the inner optical tube accommodated therein, installed rotatably with respect to the inner optical tube, and adjusting a focal distance of the subject by changing an interval between the zoom lens barrels depending on the rotation, a slide key movably engaged with the outer optical tube to rotate the outer optical tube, and an image sensor module through which the image passed through the zoom lens barrels enters.

Still another aspect of the present invention provides a camera device including, a housing, a lens assembly accommodated in the housing, and having at least one zoom lens barrel through which an image of a subject enters, an inner optical tube in which the zoom lens barrel is accommodated, and having a slide slot formed in a direction incident to the image to enable the zoom lens barrel to move, an outer optical tube rotatably accommodated in the housing, having the inner optical tube accommodated therein, having a cam profile to cross the slide slot, and adjusting a focal distance of the subject by rotation of the zoom lens barrel movably engaged with the cam profile, a slide key movably engaged with the outer optical tube to rotate the outer optical tube, and exposed to the exterior of the housing, and an image sensor module accommodated in the housing, and through which the image passed through the zoom lens barrel enters.

Yet another aspect of the present invention provides an information communication device including a body; a housing disposed in the body, a lens assembly accommodated in the housing, and having at least one zoom lens barrel through which an image of a subject enters, an inner optical tube in which the zoom lens barrel is movably accommodated in a direction incident to the image, an outer optical tube accommodated in the housing, in which the inner optical tube is accommodated, installed rotatably with respect to the inner optical tube, and adjusting a focal distance of the subject by moving the zoom lens barrel depending on the rotation, a slide key movably engaged with the outer optical tube to rotate the outer optical tube, and exposed to the exterior of the body; and an image sensor module accommodated in the housing, and through which the image passed through the zoom lens barrel enters.

In the above aspects, a slide slot may be formed at the inner optical tube in a direction incident to the image, a cam profile may be formed at the outer optical tube to cross the slide slot, and the zoom lens barrel may be movably engaged with a crossing part of the slide slot and the cam profile.

The inner optical tube may have at least the same number of slide slots as the number of zoom lens barrels. In addition, the outer optical tube may have a cam profile corresponding to each slide slot to cross the slide slot.

A linear shape of the cam profile may be formed such that moving distance of the zoom lens barrels is relatively varied when the slide key moves.

The zoom lens barrel may have a slide projection formed at its outer surface to be slidably inserted into the crossing part of the slide slot and the cam profile.

The inner optical tube may be fixedly engaged with the housing so as not to be rotated, and the outer optical tube may be engaged with the housing not to be moved in an incident direction of the image.

The housing may have a straight guide slot, the slide key may be movably inserted into the guide slot, and the outer optical tube may have a slot into which the slide key is movably inserted.

The slide key may be exposed to the exterior of the body. In addition, the slide key may have a pleat-shaped anti-sliding part on its outer surface.

### BRIEF DESCRIPTION OF THE DRAWINGS

These and/or other aspects and advantages of the present invention will become apparent and more readily appreciated from the following description of the embodiments, taken in conjunction with the accompanying drawings of which:
FIG 1 is a perspective view of a terminal in accordance with the present invention;
FIG 2 is a perspective view of a camera device of a terminal in accordance with the present invention;
FIG 3 is an exploded perspective view of a camera device of a terminal in accordance with the present invention;
FIG 4 is a perspective view of a partially assembled camera device of a terminal in accordance with the present invention; and
FIG 5 is an exploded perspective view of a camera device of a terminal in accordance with the present invention, in which an inner part of an optical tube is exploded.

### DETAILED DESCRIPTION OF THE INVENTION

The camera device in accordance with the present invention may be adapted to various communication devices such as a camcorder, a digital camera, a mobile terminal, a video camera, a videophone, and so on. Hereinafter, a mobile terminal employing a camera device in accordance with the present invention will be exemplarily described.

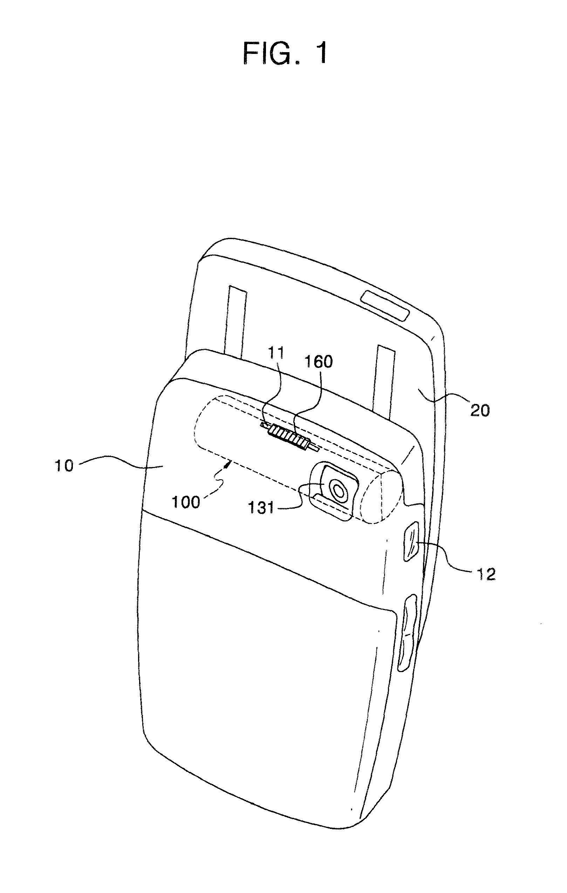

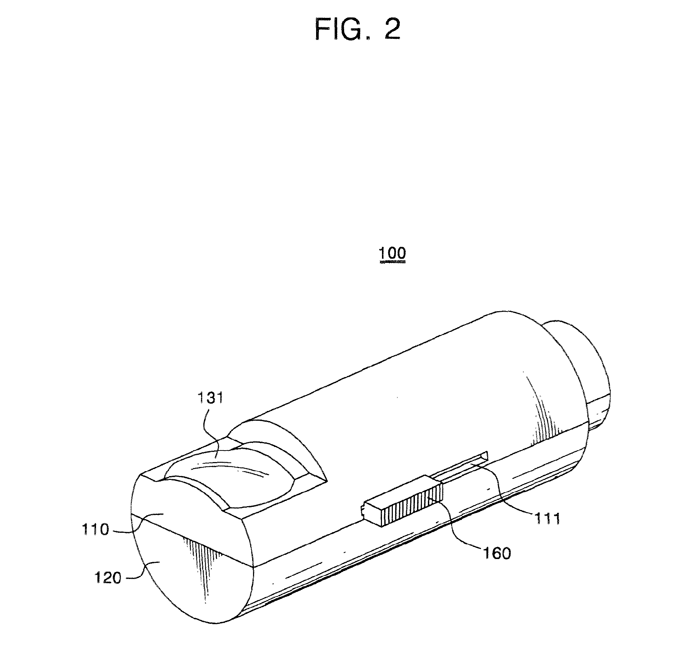

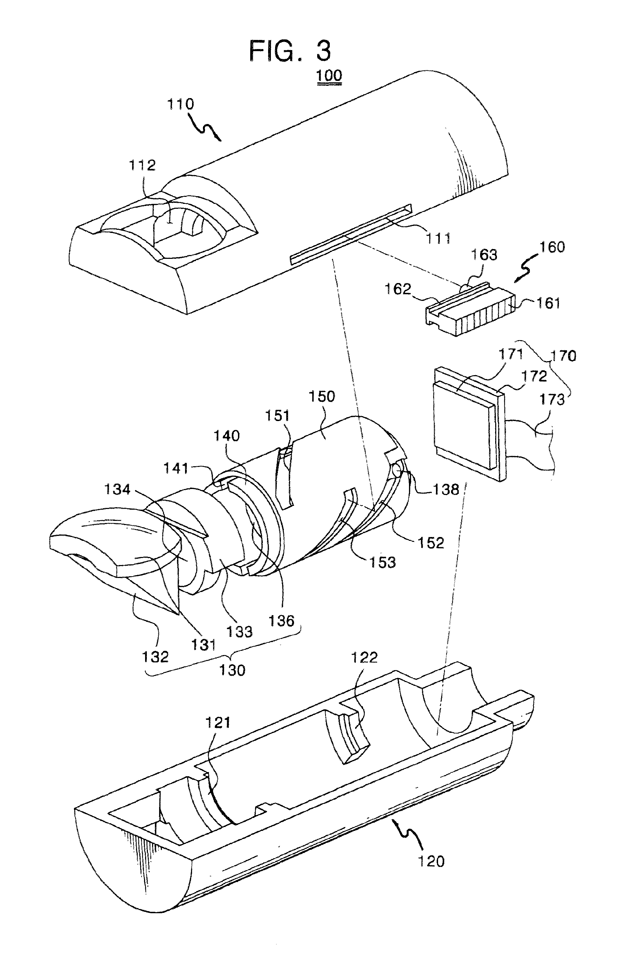

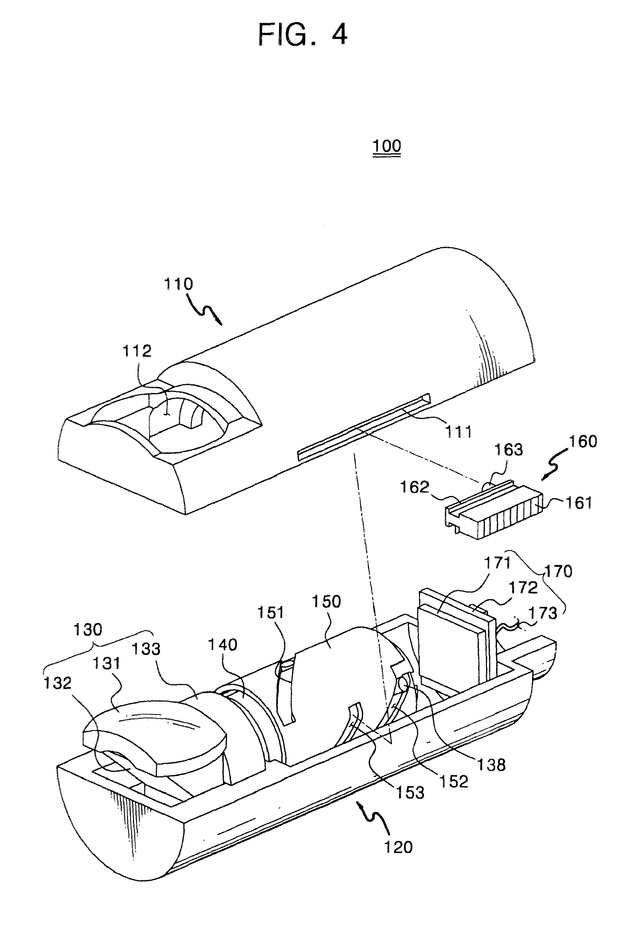

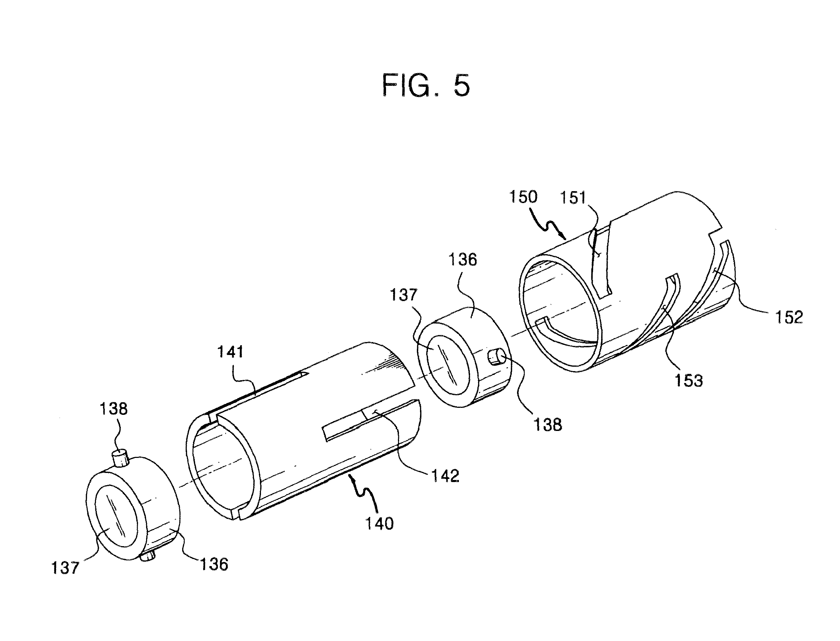

FIG 1 is a perspective view of a terminal in accordance with the present invention, FIG 2 is a perspective view of a camera device of a terminal in accordance with the present invention, FIG 3 is an exploded perspective view of a camera device of a terminal in accordance with the present invention, FIG. 4 is a perspective view of a partially assembled camera device of a terminal in accordance with the present invention, and FIG 5 is an exploded perspective view of a camera device of a terminal in accordance with the present invention, in which an inner part of an optical tube is exploded.

Referring to FIG. 1, the mobile terminal has a display part 20 that is slidably disposed on a body 10. The display part 20 has a display window (not shown). A camera device 100 is accommodated in the body 10.

While FIG 1 illustrates the camera device 100 accommodated in an upper part of the body 10 of the mobile terminal, it would be recognized that this is only one exemplar embodiment of the placement of the camera device in a terminal and that the camera device 100 may be installed at various positions of the body 10, without altering the scope of the invention.

In this illustrated embodiment, the body has a guide slot 11 at its upper side so that a slide key 160 is movably inserted into the guide slot 11. In addition, an incident lens 131, through which an image of a subject enters, is installed at one surface of the body 10 to be exposed to the exterior. In addition, the body 10 has a photographing button 12 to photograph an image of a subject using the camera device 100.

Referring to FIGS. 2 to 5, the camera device 100 includes housings 110 and 120, a lens assembly 130, an inner optical tube 140, an outer optical tube 150, and an image sensor module 170, which are accommodated in the housings 110 and 120.

The housings 110 and 120 may be separately installed in the body 10, or integrally formed within the body 10. At this illustrated embodiment, the housings 110 and 120 have a plurality of ribs 121 and 122, respectively, disposed on their inner surfaces such that the lens assembly 130, the outer optical tube 150, and the image sensor module 170 are stably mounted in the housings 110 and 120.

The housings 110 and 120 are referred-to herein as a first housing 110 and a second housing 120 are engaged with each other to form a substantially cylindrical shape. The first and second housings 110 and 120 may be adhered to each other by an adhesive agent, or engaged with each other by a separate fastening member.

The first housing 110 has a guide slot 111 corresponding to the guide slot 11 of the body 10 of the mobile terminal. In addition, the first housing 110 has an opening 112 in communication with the exterior.

The lens assembly 130 includes an incident lens 131 disposed in the opening 112 of the first housing 110 to receive an image of a subject, a prism 132 for reflecting the image entered through the incident lens 131 at a predetermined angle, a stationary lens barrel 133 through which the image reflected by the prism 132 enters, and a zoom lens barrel 136 (see FIG 4) through which the image passed through the stationary lens barrel 133 enters.

The stationary lens barrel 133 is disposed at one side of the prism 132. The stationary lens barrel 133 includes at least one lens 134. The stationary lens barrel 133 is fixed to the housings 110 and 120.

The inner optical tube 140 and the outer optical tube 150 are installed in one side of the stationary lens barrel 133 to form a dual-tube structure.

The zoom lens barrel 136 (see FIG 4) is accommodated in the inner optical tube 140 to be movable in an incident direction of the image. In addition, slide slots 141 and 142 are formed in the inner optical tube 140 in the incident direction of the image.

There are at least the same number of slide slots 141 and 142 as the number of zoom lens barrels 136. When two zoom lens barrels 136 are disposed as shown in FIG 5, at least two slide slots 141 and 142 are formed. In FIG 5, a pair of slide grooves 141 or 142, one each corresponding to each zoom lens barrel 136, is disposed opposite to each other. While not shown, a plurality slide slots may be formed, wherein each corresponds to a zoom lens barrel 136. At this time, the zoom lens barrels 136 are inserted into the slide grooves 141 and 142, respectively.

The outer optical tube 150 has cam profiles 151 and 152 to cross the slide slits 141 and 142. The cam profiles 151 and 152 are formed to cross the slide slots 141 and 142, respectively. At this time, the cam profiles 151 and 152 may be cut through the outer optical tube 150 in a spiral pattern. In addition, the cam profiles 151 and 152 may be formed in the outer optical tube 150 to have a spiral groove.

The zoom lens barrel 136 may be movably inserted into crossing parts of the slide slots 141 and 142 and the cam profiles 151 and 152. At this time, slide projections 138 are formed on an outer periphery of the zoom lens barrel 136 to be inserted into the crossing parts of the slide slots 141 and 142 and the cam profile 151 and 152.

Linear shapes of the cam profiles 151 and 152 may be formed such that moving distances of the zoom lens barrels 136 vary when the slide key 160 moves. Therefore, in this aspect fo the invention, when the slide key 160 moves, moving speeds of the zoom lens barrels 136 is different from each other, so that a distance between the zoom lens barrels 136 is changed. As a result, it is possible to adjust a focal distance of a subject by manually performing a zoom in/out function.

The inner optical tube 140 is engaged with the housings 110 and 120 so that it is not to be rotated. In addition, the outer optical tube 150 is rotatably engaged therewith, but not moved in an direction incident to the image.

Further, a slot 153 is formed at the outer optical tube 150 so that the slide key 160 is slidably inserted into the slot 153. The slot 153 has a substantially spiral shape. A linear shape of the slot 153 may be formed such that a rotation angle of the outer optical tube 150 is proportional to a distance that the slide key 160 moves, thereby readily designing the linear shapes of the cam profiles 151 and 152.

The slide key is installed at the body 10 to be exposed to the exterior. The slide key 160 has a hooking threshold 162 to be inserted into the guide slot 111 to prevent separation of the slide key 160. In addition, the slide key 160 has a boss 163 passing through the guide slot 111 to be movably engaged with the slot 153 of the outer optical tube 150. In addition, the slide key 160 has a pleat-shaped anti-sliding part 161 on its outer surface. The pleat of the anti-sliding part 161 is formed vertical to the movement direction of the slide key 160.

The image sensor module 170, through which the image passed through the zoom lens barrels 136 enters, is installed at one side of the outer optical tube 150. The image sensor module 170 includes an image sensor 171 for converting the entered image into an electrical signal, and a printed circuit board (PCB) 172 and a flexible printed circuit board (FPCB) 173 electrically connected to the image sensor 171 to transmit information about the image to a controller of the body 10.

The operation of the camera device in accordance with an embodiment of the present invention will now be described.

When a user pushes the photographing button 12, an image of a subject passes through the incident lens 131 to be reflected by the prism 132. The reflected image passes through the stationary lens barrel 133 and the zoom lens barrel 136, and then enters the image sensor 171. At this time, the image sensor 171 transmits the electrical signal of the image to the controller through the PCB 172 and the FPCB 173. The controller displays the image on the display part 20. The display part 20 can adjust a focal distance of the camera device 100 on the basis of the image quality. Adjustment of the focal distance of the camera device 100 will now be described.

When a user moves the slide key 160 along the guide slot 111, the boss 163 of the slide key 160 moves along the slot 153 of the outer optical tube 150. At this time, the outer optical tube 150 can rotate but not move in a straight line, and the inner optical tube 140 is fixed, i.e., cannot rotate or move in a straight line.

In this process, the cam profiles 151 and 152 of the outer optical tube 150 make the slide projections 138 of the zoom lens barrels 136 reciprocate along the slide slots 141 and 142. That is, the crossing parts of the cam profiles 151 and 152 and the slide slots 141 and 142 reciprocate.

As the crossing parts of the cam profiles 151 and 152 and the slide slots 141 and 142 move, the zoom lens barrels 136 reciprocate. At this time, the cam profiles 151 and 152 make the straight movement of the zoom lens barrels 136 into a varying movement as the slide key 160 moves. By adjusting an interval between the zoom lens barrels 136, a user can operate the slide key 160 to adjust a focal distance depending on a distance of a subject. By appropriately adjusting the zoom lens barrels 136, it is possible to photograph an image of the subject using a manual zoom in/out function.

As can be seen from the foregoing, since it is possible to manually perform a zoom in/out function of a camera device of the present invention, there is no need to install a separate actuator, thereby advantageously saving space and miniaturizing the camera device. In addition, since it is possible to reduce a space for installing the camera device, a space for installing an additional device having another function can be obtained.

Although a few embodiments of the present invention have been shown and described, it will be appreciated by those skilled in the art that changes may be made in these embodiments without departing from the scope of the invention, which is defined in the appended claims and their equivalents.

## Claims

1. A camera device (100) comprising:
a lens assembly (130) having at least one zoom lens barrel (136) through which an image of a subject enters;
an inner optical tube (140) in which the zoom lens barrel (136) is movably accommodated in an incident direction of the image;
an outer optical tube (150), having the inner optical tube (140) accommodated therein, installed rotatably with respect to the inner optical tube, for adjusting a focal distance of the subject by moving the zoom lens barrel depending on the rotation;
a slide key (160) movably engaged with the outer optical tube (150) to rotate the outer optical tube; and
an image sensor module (170) through which the image passed through the zoom lens barrel enters.

2. The camera device according to claim 1, wherein a slide slot (142) is formed at the inner optical tube (140) in an incident direction of the image, a cam profile (151,152) is formed at the outer optical tube (150) to cross the slide slot (142), and the at least one zoom lens barrel (136) is movably engaged with a crossing part of the slide slot and the cam profile.

3. The camera device according to claim 2, wherein the inner optical tube (140) has at least the same number of slide slots (142) as the number of zoom lens barrels (136).

4. The camera device according to claim 3, wherein the outer optical tube (150) has a cam profile (151,152) corresponding to each slide slot (142) to cross the slide slot.

5. The camera device according to claim 4, wherein a linear shape of the cam profile (151,152) is formed such that moving distances of the zoom lens barrels (136) are varied relatively when the slide key (160) moves.

6. The camera device according to claim 4, wherein the zoom lens barrel (136) has a slide projection (138) formed at its outer surface to be slidably inserted into the crossing part of the slide slot (142) and the cam profile (151,152).

7. The camera device according to claim 1, further comprising:
a housing (100) for accommodating the lens assembly (130), the optical tubes (140,150), and the image sensor module (170).

8. The camera device according to claim 7, wherein the inner optical tube (140) is fixedly engaged with the housing (100) so as not to be rotated, and the outer optical tube (150) is engaged with the housing (100) not to be moved in an incident direction of the image.

9. The camera device according to claim 8, wherein the housing (100) has a straight guide slot (111), wherein the slide key (160) is movably inserted into the guide slot and into a slot (153) of the outer optical tube (150).

10. The camera device according to claim 7, wherein the slide key (160) is exposed to the exterior of the housing (100).

11. The camera device according to claim 1, wherein the slide key (160) has a pleat-shaped anti-sliding part (161) on its outer surface.

12. The camera device according to claim 7, wherein the housing has a straight guide slot, the outer optical tube has a slot to cross the guide slot, and the slide key is movably engaged with the guide slot and the slot.

13. The camera device according to claim 1, wherein the inner optical tube has at least the same number of slide slots as the number of zoom lens barrels and the outer optical tube has a cam profile corresponding to each slide slot to cross the slide slot.

14. An information communication device comprising:
a body (10) in which a camera device according to one of the previous claims is arranged.
